# FASCICULE DE BREVET EUROPEEN

(11) **EP 0 657 108 B1**
(45) Date de publication et mention de la délivrance du brevet: **08.09.1999**
(21) Numéro de dépôt: 94118380.8
(22) Date de dépôt: 23.11.1994
(51) Int. Cl.: A23L 3/37, A23G 9/02

(54) **Agent de nucléation des produits congelés**
Nukleationsmittel für gefrorene Produkte
Nucleation agent for frozen products

(30) Priorité: 11.12.1993 EP 93120039
(43) Date de publication de la demande: 14.06.1995
(73) Titulaire: SOCIETE DES PRODUITS NESTLE S.A., 1800 Vevey (CH)
(72) Inventeur: Jann, Alfred, F-74200 Marin-Thonon (FR); Lundheim, Rolv, Allforsk, N-7010 Trondheim (NO); Niederberger, Peter, CH-1066 Epalinges (CH); Richard, Michel, CH-1059 Peney-Le-Jorat (CH)
(74) Mandataire: Wavre, Claude-Alain

(56) Documents cités:
- EP-A- 0 424 771
- WO-A-92/22581

## Description

La présente invention a pour objet un agent de nucléation de la glace et un procédé de préparation d'un tel agent.

Il est connu que l'on peut congeler un produit en présence d'un agent de nucléation de la glace, à une température supérieure à celle où ce produit aurait congelé spontanément. En effet, les agents de nucléation de la glace favorisent la formation de cristaux de glace à une température supérieure à celle où ces cristaux se seraient formés sans la présence d'agents de nucléation. Ainsi, de tels agents sont à ce jour utilisés dans des procédés de congélation de produits, notamment de produits alimentaires, en vue de diminuer la quantité d'énergie nécessaire à la congélation de ces produits (EP A1 0424771).

Il est également connu que les agents de nucléation de la glace peuvent accroître les dimensions des cristaux de glace lors de la congélation de certains produits (Ryder, J.M., 1987, mémoire de thèse p155, université de Rhode Island). En effet, les cristaux de glace présents dans un produit congelé avec un agent de nucléation de la glace sont plus grands que ceux présents dans le même produit congelé sans un tel agent. Ces grands cristaux de glace laissent de plus une empreinte dans la texture des produits congelés en modifiant leur texture. Par ailleurs, cette modification peut être stabilisée par une lyophilisation suivie d'un chauffage du produit congelé. Ainsi, des agents de nucléation de la glace sont à ce jour utilisés pour congeler des produits, notamment des produits alimentaires, en vue d'apporter une texture intéressante au produit final (Agric. Biol. Chem., 50 (1), 169-175, 1986).

La plupart des agents de nucléation biologiques ont été trouvés dans des micro-organismes ou des insectes (EP 0424771A1). Cependant, il pourrait être très utile d'isoler un agent de nucléation de la glace à partir de plantes, notamment à partir de plantes comestibles, en vue de leur utilisation pour la congélation, la texturation ou la cryoconcentration de produits, tels que des produits alimentaires par exemple.

La présente invention a pour but de répondre à ce besoin.

A cet effet, l'agent de nucléation de la glace selon la présente invention est un agent de nucléation de la glace extrait de l'argousier (*Hippophae*). Il peut être un agrégat comprenant une partie protéique et une partie lipidique. De plus, l'argousier peut être en particulier *Hippophae rhamnoides*, *Hippophae salicifolia*, *Hippophae tibetana*, ou *Hippophae neurocarpa*.

Toutes les plantes qui font parties du genre *Hippophae* sont des argousiers. De plus, cet arbuste est largement distribué en Europe et en Asie, et présente l'avantage de produire de nombreuses baies orangées. L'argousier est ainsi une source abondante d'agent de nucléation de la glace.

Dans la suite de la description, on emploiera le terme "agent" ou "agent de nucléation" dans le sens "agent de nucléation de la glace".

Dans le procédé de production d'un agent de nucléation de la glace selon la présente invention, on prépare un extrait des baies ou des feuilles d'argousier contenant ledit agent.

De préférence, on utilise des baies d'argousier mûres (c'est-à-dire des baies qui ont mûri jusqu'à présenter une teinte orangée), et en particulier des baies d'argousier présentant une teneur en eau de 80% à 90%, par exemple. On peut ainsi broyer ou bien écraser les baies par pressage ou par centrifugation, puis récupérer le jus brut résultant comme extrait, par exemple.

Comme les tissus de la baie et en particulier son enveloppe contiennent une quantité importante d'agent de nucléation, on peut aussi extraire directement les baies par une solution d'extraction comprenant des pectine, des mono-, oligo- et/ou poly-saccharides, et de préférence par au moins une de ces solutions comprenant dans de l'eau 0,0001 à 2% en poids de pectines de tous degrés d'estérification, par exemple, ou 0,0001 à 2% en poids d'au moins un desdits saccharides.

En particulier, on choisit la solution d'extraction dans le groupe formé par les solutions d'alginates, d'acide polygalacturonique, d'amylose, d'amylopectine, de polymannanes, d'arabinose, de galactose, de lactose, de glucose, de fructose et de sucrose.

Pour réaliser cette extraction, on peut ainsi écraser ou broyer des baies, par exemple, ajouter au volume de baies ainsi ontenu 1 à 200 volumes d'au moins une desdites solutions d'extraction, mais de préférence 5 à 100 volumes, puis laisser agir le tout pendant 1 à 30 min à une température de 4 à 35°C, et enfin séparer une partie solide par centrifugation ou par filtration du mélange, par exemple, et récolter une partie liquide ayant une activité de nucléation.

De préférence, on soumet les baies ou la partie solide du mélange extrait à au moins 1 nouvelle extraction comme décrit ci-dessus. Pour cela, les baies ou la partie solide du mélange d'extraction peuvent être resuspendues chaque fois dans une desdites solutions d'extraction, puis l'on peut ensuite séparer une partie solide et récolter un extrait liquide. On a ainsi pu observer que l'activité de nucléation des différents extraits sucessifs reste identique pendant au moins les 25 premières extractions. Il est cependant préférable de préalablement ôter le jus brut des baies avant d'en extraire plusieurs fois de suite l'agent de nucléation. En effet, ce jus brut contient des sucres, des arômes et des protéines qui sont préjudiciables à l'activité de nucléation.

De même, pour préparer un extrait de feuilles d'argousier, on peut broyer finement des feuilles, puis en extraire l'agent de nucléation de la même manière que décrite précédemment par au moins une desdites solutions de pectine, de mono-, oligo- et/ou poly-saccharide, par exemple.

Les baies d'argousier étant comestibles et traditionnellement utilisées dans la fabrication de liqueurs et de confitures, un extrait brut de baie d'argousier peut être ainsi utilisé directement comme additif naturel pour la préparation de produits alimentaires, en vue de les congeler, les texturer ou les cryoconcentrer, par exemple.

Dans un procédé de congélation d'un produit, on peut ainsi ajouter à un produit congelable ledit agent de nucléation de la glace et congeler ledit produit entre -5°C et -25°. L'avantage d'utiliser l'agent selon l'invention réside dans le fait que l'on peut congeler à des températures élevées entre -5°C et -10°C, par exemple, et que l'additif est parfaitement comestible.

Dans un autre procédé de texturation de produits alimentaires, on ajoute à un produit congelable ledit agent de nucléation de la glace, on congèle ledit produit entre - 5°C et -25°C, on lyophilise puis on chauffe ledit produit. L'avantage d'utiliser l'agent selon l'invention réside dans le fait que l'on peut congeler à des températures élevées entre -5°C et -10°C, par exemple, que l'additif est parfaitement comestible, et que les cristaux sont de grande taille, entraînant de ce fait une meilleure modification de la texture du produit.

Enfin, on peut aussi cryoconcentrer un liquide, tel un extrait de café, un jus de fruit ou un jus de légume, en lui ajoutant un extrait comprenant l'agent selon la présente invention, en le congelant entre -5°C et -10°C, puis en séparant la phase cristalline de la phase liquide par centrifugation, par exemple. L'avantage d'utiliser l'agent selon l'invention réside dans le fait que l'on peut congeler à des températures élevées entre -5°C et -10°C, par exemple, que l'additif est parfaitement comestible, que les cristaux sont de grandes tailles, entraînant de ce fait une meilleure séparation des phases, et que la vitesse de cristallisation est relativement grande, accélérant ainsi de ce fait l'ensemble du processus de cryoconcentration.

L'agent de nucléation de la glace selon la présente invention est décrit plus en détail par l'intermédiaire de différentes propriétés déterminées notamment à l'aide de différents tests, comme exposé ci-après. Les pourcentages sont donnés en poids, sauf indication contraire.

### Mesure de l'activité de nucléation d'extraits d'argousier

### Préparation d'extraits de baies d'argousier:

Des baies d'argousier (*Hippophae rhamnoides*) sont récoltées à maturité puis sont stockées congelées à -40°C jusqu'à utilisation. Les extraits sont conservés à 4°C.
- Extrait 1 (extrait brut de baie): les baies sont décongelées, écrasées puis centrifugées dans un tube Eppendorf (5000 gₙ, 10 min) à 20°C. On utilise comme extrait le surnageant.
- Extrait 2 (baies broyées): les baies congelées sont broyées de manière intense dans un broyeur POLYTRON pendant 5 min. On utilise l'extrait contenant les peaux des baies.
- Extrait 3 (surnageant de baies broyées): les baies broyées sont centrifugées (5000 gₙ, 10 min) à 4°C. On utilise comme extrait le surnageant.
- Extrait 4 (culot de baies broyées): après centrifugation de baies préalablement broyées, on reprend le culot dans 3 volumes d'eau que l'on utilise comme extrait.
- Extraits 5 à 7: on reprend un culot de baies broyées et centrifugées dans 25 volumes d'une solution comprenant 0,01, 0,1 ou 0,5% de pectine dans de l'eau, on laisse agir le tout pendant 15 min tout en l'agitant occasionnellement, on centrifuge (10000gₙ, 10 min), puis on utilise comme extrait le surnageant.
- Extraits 8 à 9: on extrait de la même manière que pour les extraits 5 à 7 un culot de baies broyées et centrifugées par 2 volumes d'une solution comprenant 0,001 ou 0,0001% de pectine dans de l'eau.
- Extraits 10 à 22: on extrait de la même manière que pour les extraits 5 à 7 un culot de baies broyées et centrifugées, avec respectivement des solutions comprenant 0,1% de pectine à divers degrés d'estérification (10%, 38%, 75%), ou avec des solutions comprenant respectivement 0,1% d'acide polygalacturonique, 0,1% d'amylose, 0,1% d'amylopectine, 0,01% d'alginate, 1% de polymannanes (fraction de polysaccharides de café), 0,1% de galactose, 0,1% de lactose, 0,1% de glucose, 0,01% d'arabinose et 0,01% de sucrose.

### Activité de nucléation:

On mesure l'activité de nucléation d'un agent présent dans un produit par la mesure de la température à laquelle le produit congèle. Cette température est dite température de nucléation. On compare alors cette température à celle obtenue avec le produit ne contenant pas d'agent (contrôle). On observe une activité de nucléation lorsque la température de nucléation du produit contenant l'agent est supérieure à celle du produit témoin.

L'activité de nucléation peut être caractérisée selon trois températures: les températures de nucléation de la glace (en °C) T20, T50, T80 indiquant que respectivement 20%, 50% et 80% des échantillons congèle à cette température.

Dans la suite de la description, on emploiera le terme "point de nucléation" dans le sens "température de nucléation à laquelle 50% des échantillons sont congelés", soit la valeur T50.

Test en goutte: les extraits 1 à 4 précités (10⁰) sont dilués de 10 à 1000 fois (10⁻¹ à 10⁻³), avec de l'eau bidistillée ou un jus de fraises. Dix gouttes de 10 µl d'extrait sont déposées sur un film d'aluminium recouvert de paraffine, et le film est placé sur un bain d'eau refroidie à une vitesse de 0.1°C par minute. Toutes les dilutions sont sur la même feuille. On détermine ensuite les valeurs T20, T50 et T80.

Le jus de fraise est préparé par une centrifugation de fraises fraîches préalablement lavées (centrifugeuse de cuisine) suivie d'une deuxième centrifugation du jus à 4°C (10000 gₙ, 15 min). Le surnageant est alors stocké congelé à -20°C, puis est décongelé avant d'être utilisé comme modèle.

Test en tubes de verre: on ajoute 100 ml d'extrait 5 à 22 précités dilué 10 fois dans de l'eau bidistillée dans un tube de verre à paroi mince, que l'on place ensuite dans un bain d'eau refroidie à une vitesse de 0,1°C/min. On détermine alors les valeurs T20, T50 et T80.

Le tableau 1 ci-après présente pour les extraits 1 à 4 précités, les résultats des essais réalisés selon le test en goutte.

Comme on peut le voir, on constate une différence marqué entre les températures de nucléation des extraits (dilution jusqu'à 10⁻²) et celle de l'échantillon congelé sans agent (contrôle). Par contre, l'activité de nucléation d'un jus brut de baie dilué à 1/1000 est relativement faible. De plus, on constate en général une variation entre les températures de nucléation des extraits bruts (10⁰) et celles des extraits dilués. La concentration élevée en sucre, dans les extraits bruts perturberait probablement l'activité de nucléation de l'agent.

**Tableau 1**

| **Extrait** | **Dilution** | **Eau bidistillée** | | | **Jus de fraise** | | |
|---|---|---|---|---|---|---|---|
| | | **T20** | **T50** | **T80** | **T20** | **T50** | **T80** |
| **1** | 10⁰ | -7,3 | -7,4 | -7,9 | -6,7 | -7,0 | -7,1 |
| | 10⁻¹ | -6,8 | -7,1 | -7,9 | -6,4 | -6,8 | -7,2 |
| | 10⁻² | -6,8 | -8,9 | <-9 | -7,2 | -7,4 | -8,3 |
| | 10⁻³ | <-9,0 | <-9,0 | <-9,0 | -7,5 | -8,5 | -9,0 |
| **2** | 10⁰ | -7,3 | -7,7 | -7,9 | -6,7 | -6,9 | -7,0 |
| | 10⁻¹ | -5,9 | -6,6 | -6,9 | -6,6 | -6,8 | -6,9 |
| | 10⁻² | -6,2 | -7,7 | <-9,0 | -7,2 | -7,5 | -7,7 |
| | 10⁻³ | -6,8 | <-9,0 | <-9,0 | -7,1 | -7,7 | -8,4 |
| **3** | 10⁰ | -7,3 | -7,3 | -7,7 | -7,0 | -7,3 | -7,4 |
| | 10⁻¹ | -6,4 | -6,7 | -7,3 | -7,2 | -7,4 | -7,5 |
| | 10⁻² | -7,2 | -7,6 | -7,8 | -7,4 | -7,6 | -7,8 |
| | 10⁻³ | -8,0 | -8,9 | <-9,0 | -7,8 | -7,9 | -8,7 |
| **4** | 10⁰ | -5,9 | -6,5 | -6,6 | -5,7 | -6,0 | -6,2 |
| | 10⁻¹ | -5,9 | -6,5 | -6,9 | -6,6 | -6,7 | -7,4 |
| | 10⁻² | -6,4 | -6,8 | -8,7 | -7,5 | -7,9 | -8,2 |
| | 10⁻³ | -7,4 | -8,8 | <-9,0 | -8,4 | <-9,0 | <-9,0 |
| **Contrôle** | 10⁰ | <-10 | <-10 | <-10 | -9,4 | <-10 | <-10 |

Le tableau 2 ci-après présente pour les extraits 5 à 22, les résultats des essais réalisés selon le test en tube de verre.

**Tableau 2**

| **N° Extrait** | **T20** | **T50** | **T80** |
|---|---|---|---|
| **5**. 0,5% de pectine | -5,0 | -5,0 | -5,5 |
| **6**. 0,1% de pectine | -5,0 | -5,0 | -5,5 |
| **7**. 0,01% de pectine | -5,0 | -5,0 | -5,5 |
| **8**. 0,001% de pectine | -5,5 | -5,5 | -5,5 |
| **9**. 0,0001% de pectine | -5,5 | -5,5 | -5,5 |

| **Contrôles** | | | |
|---|---|---|---|
| Extrait n°5 filtré par une membrane de 0,45µm | -5,5 | -5,5 | -5,5 |
| Solution de pectine 0,5% | -9,5 | -11,5 | -12 |
| Solution de pectine 0,5% filtré (0,45µm) | -9,0 | -11,5 | -12 |
| **10**. 0,1% de pectines (10% d'esters) | -5,5 | -5,5 | -6,0 |
| **11**. 0,1% de pectines (38% d'esters) | -5,0 | -5,0 | -5,5 |
| **12**. 0,1% de pectines (75% d'esters) | -5.5 | -5,5 | -5,5 |
| **13**. 0,1% d'acide polygalacturonique | -5,0 | -5,5 | -5,5 |
| **14**. 0,1% d'amylose | -5,5 | -6,0 | -6,5 |
| **15**. 0,1% d'amylopectine | -5,5 | -6,0 | -6,0 |
| **16**. 0,01% d'alginate | -5,0 | -5,5 | -5,5 |
| **17**. 0,1% de polymanannes | -5,5 | -5,5 | -6,5 |
| **18**. 0,1% de galactose | -4,5 | -5,0 | -5,0 |
| **19**. 0,1% de lactose | -5,0 | -5,0 | -5,0 |
| **20**. 0,1% de glucose | -5,0 | -5,0 | -5,0 |
| **21**. 0,01% d'arabinose | -5,0 | -5,0 | -5,0 |
| **22**. 0,01% de sucrose | -5,0 | -5,0 | -5,5 |

Comme on peut le voir dans le tableau 2 ci-dessus, les extraits réalisés à l'aide d'une solution de pectine, de polysaccharide ou de sucre, présentent une température de nucléation moyenne de l'ordre de -5,5°C. Pour comparaison, une solution pure de pectine, filtrée ou non par une membrane de porosité de 0,45µm (Sartorius), présente une température de nucléation inférieure à -10°C.

De plus, un extrait de baie réalisé à l'aide d'une solution de pectine qui est filtré par une membrane de porosité de 0,45µm conserve une activité de nucléation de -5,5°C. Ceci suggère donc que l'activité n'est pas liée à la présence d'un microorganisme présent dans ou à la surface de la baie.

Enfin, lorsque on répète plusieurs fois de suite l'extraction d'un culot de baie broyées et centrifugées à l'aide de chaque fois 12,5 volumes d'une solution aqueuse comprenant 0,1% de pectine, pendant 15 min suivi d'une centrifugation, on observe encore une bonne activité de nucléation dans le 25^{ième} extrait. Le tableau 3 ci-après présente l'activité de nucléation des extraits successifs obtenus de cette manière, déterminée selon le test en tube de verre.

**Tableau 3**

| **N**^{**ième**} **Extrait de tissus de baies** | **T20** | **T50** | **T80** |
|---|---|---|---|
| **5** | -5,0 | -5,5 | -5,5 |
| **10** | -5,0 | -5,5 | -5,5 |
| **15** | -5,0 | -5,5 | -6,0 |
| **20** | -5,5 | -6,5 | -7,0 |
| **25** | -5,5 | -6,0 | -6,5 |
| **30** | -5,5 | -7,0 | -7,5 |

### Activité de nucléation dépendant de la maturité de la baie:

On mesure l'activité de nucléation saisonnière d'un jus de baies d'argousier (*Hippophae rhamnoides*) récoltées dans la localité de Trondheim (Norvège).

Au départ, vers la mi-juillet, les baies sont petites et vertes, contenant très peu de jus. C'est pourquoi, on prépare les échantillons de juillet et d'août en mélangeant les baies à un volume d'eau déionisée puis en les écrasant à l'aide d'un mortier, tandis qu'on prépare les échantillons des mois de septembre à octobre de couleur orangée en écrasant les baies à l'aide d'un mortier (sans ajouter d'eau). Les extraits sont obtenus après centrifugation des échantillons préparés (5000 gₙ, 10 min) et filtration du surnageant à travers un filtre de porosité 0,45µm. On détermine finalement le point de nucléation des extraits selon la méthode précitée.

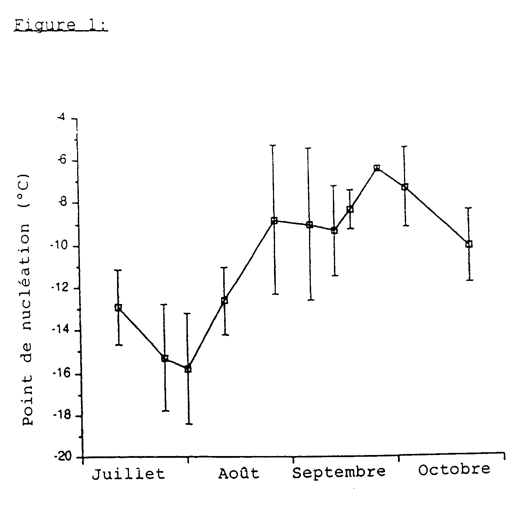

La figure 1 illustre la variation du point de nucléation en fonction de la date à laquelle les baies précitées ont été récoltées.

On constate que la meilleure activité de nucléation concerne les baies des mois de septembre et d'octobre, donc des baies mûres, de couleur orangée.

On peut encore apprécier le degré de maturité des baies de manière plus précise en mesurant leur teneur en eau, par des moyens connus de l'homme de l'art. Cette mesure a été réalisée pour les baies précitées de juillet à octobre: la meilleure activité de nucléation a été trouvée dans les baies du mois de septembre, présentant une teneur en eau comprise entre 80% et 90%.

### Activité de nucléation de feuilles d'argousier:

On broie des feuilles d'argousier (*Hyppophae rhamnoides*) et l'on en extrait l'agent de nucléation par une solution de pectine ou de sucre de la même manière que décrit pour de la préparation des extraits de baies ayant les numéros 5 à 22 ci-dessus.

Dans tous les cas, l'activité moyenne de nucléation des extraits de feuille déterminée par le test dans un tube de verre est de l'ordre de -5,5°C. Les feuilles d'argousier sont donc également une source non négligeable d'agents de nucléation.

### Purification, Caractérisation

On peut purifier l'agent de nucléation de l'argousier par la méthode ci-après, par exemple. On peut ensuite caractériser l'agent par différentes méthodes.

Des baies d'argousier (*Hippophae rhamnoides*) sont pressées par centrifugation et 1/3 de volume d'eau distillée est ajouté au jus. Le mélange est alors centrifugé (5000 gₙ, 10 min), puis le surnageant est filtré sur une membrane de porosité 0,45 µm (Minisart, Sartorius). Le filtrat est alors mis sur une colonne de filtration sur gel 2,6x60 cm contenant une résine Sephacryl HR 300, et est élué à 4°C par un tampon tris 0,05M de pH 7,5 (240 ml/h). Le premier pic d'élution présente une activité de nucléation (il est connu que pour ce type de colonne, le volume d'éluat correspondant au premier pic d'élution contient des molécules de très haut poids moléculaire).

L'agent de nucléation provient donc de l'argousier et non pas d'une bactérie présente dans la baie (filtration sur une membrane de porosité 0,45 µm). De plus, cet agent est une molécule de haut poids moléculaire.

L'éluat contenant l'agent de nucléation est alors analysé par électrophorèse sur gel de polyacrylamide. L'électrophorèse SDS PAGE (en présence de SDS) révèle la présence d'une protéine d'un poids moléculaire apparent de 25 à 27 kD (kilo-dalton).

Enfin l'électrophorèse PAGE (sans SDS) sur un gel de grande porosité s'avère impossible, malgré le prétraitement de l'éluat par du chloroforme pour délipider la protéine et malgré l'utilisation dans le gel de détergent non ionique (0,5% Triton X-100) ou d'urée 7M.

Par conséquent l'agent de nucléation est probablement un agrégat de haut poids moléculaire qui comprend une partie protéique qui peut être attachée à des structures cellulaires qui sont trop petites pour être retenues sur un filtre de 0,45 µm, mais trop grandes pour migrer sur un gel de polyacrylamide non dénaturant. De plus, ces structures cellulaires pourraient participer également à l'activité de nucléation. Enfin, la partie protéique est une protéine qui comprend des sous unités de poids moléculaire apparent de 25 à 27 kD.

### Inactivation

On soumet l'agent de nucléation à des traitements chimiques pour déterminer les structures essentielles à l'activité de nucléation.

On réalise un traitement de délipidation sur l'agent de nucléation purifié. Pour cela, on mélange 2,5 volumes de chloroforme à 1 volume d'agent purifié, on agite le mélange, on le laisse reposer 24 heures à 4°C, puis on extrait le chloroforme par l'action de bulles d'air. On obtient ainsi une fraction contenant l'agent délipidé et une fraction contenant les lipides. Lorsqu'on compare les activités de nucléation de l'agent purifié et de l'agent délipidé, on observe une diminution du point de nucléation de 4°C suite au traitement de délipidation. Les lipides semblent donc jouer un rôle dans l'activité de nucléation.

De plus, si l'on mélange la fraction lipidique avec la fraction contenant l'agent délipidé pendant 14 jours à 4°C, puis que l'on compare les activités de nucléation du mélange et de la fraction contenant l'agent délipidé, on observe une augmentation du point de nucléation de 3°C. Par conséquent les lipides contribuent à l'obtention d'une haute activité de nucléation.

L'agent de nucléation peut donc comprendre également une partie lipidique.

On mesure l'effet du mercaptoéthanol et de 0,01M de SDS à différentes valeurs de pH, sur des extraits bruts de baie. Le mercaptoéthanol n'a pas d'effet sur le point de nucléation ce qui indique que les ponts disulfure ne sont pas essentiels pour la nucléation. Et l'effet du SDS sur le point de nucléation est relativement limité (0 à 1°C selon le pH), ce qui indique que les charges positives à la surface de l'agent ne sont pas indispensables à l'activité de nucléation (le SDS ajoute un excès de charge négative à la protéine et, par là même, masque les charges positives présentes à la surface de la protéine). De même le pH ne semble pas influencer le comportement de l'agent de nucléation.

Enfin, on analyse l'action du N-Bromo-succinimide (NBS) sur le point de nucléation de l'agent. Le mélange d'agent de nucléation purifié et de NBS (concentration finale 0,001 M) est ajusté à pH 3,0 par ajout de petites quantités de HCl 2M, puis est laissé 30 minutes à 25°C, avant d'être réajusté à pH 7,5 par ajout de petites quantités d'un tampon Tris. La détermination du point de nucléation avant et après traitement révèle une diminution de ce point de 2,8°C. Ceci indique que les acides aminés aromatiques sont importants pour l'activité de nucléation (le NBS oxyde les groupes indole et les tyrosines).

Les exemples suivants sont présentés à titre d'illustration des diverses applications industrielle de l'agent de nucléation selon la présente invention, dans un procédé de congélation de produist congelables, dans un procédé de texturation par congélation d'un produit alimentaire congelable, et dans un procédé de concentration d'un liquide alimentaire.

### Exemple 1:

On prépare un jus brut de baies mûres d'argousier, en broyant des baies, puis en en récupérant le surnageant après centrifugation.

On ajoute alors à une crème glacée, au cours de sa préparation de manière traditionnelle, ce jus brut de baie d'argousier à raison de 1 volume pour 600 volumes de crème glacée. Puis on congèle la crème à -8°C.

Pour comparaison, une crème glacée préparée de manière traditionnelle, sans ajout d'un jus de baie d'argousier, est congelée à -12°C.

### Exemple 2:

On prépare un extrait de baie d'argousier en broyant premièrement des baies, en leur ajoutant ensuite 10 volumes d'une solution à 0,1% de pectine que l'on laisse réagir 15 min, puis en centrifugeant le mélange à 10000 g pendant 10 min pour en récupérer le surnageant.

On ajoute alors à une mousse de viande, au cours de sa préparation de manière traditionnelle, l'extrait de baie d'argousier ainsi préparé à raison de 1 volume pour 100 volumes de mousse de viande. Puis on congèle la mousse de viande à -10°C.

Pour comparaison, une mousse de viande préparée de manière traditionnelle, sans ajout d'un extrait de baie d'argousier, est congelée à -15°C.

### Exemple 3:

On prépare une pâte de protéine de soja en chauffant à 70°C pendant 10 minutes un isolat de protéine de soja à 20% de protéine, puis en refroidissant la solution à 20°C. On ajoute à cette pâte l'extrait de baie d'argousier décrit à l'exemple 1, à raison de 1 volume pour 100 volumes de cette pâte. On congèle la pâte présente sous forme d'une mince couche de 2 à 5 mm d'épaisseur à une vitesse moyenne de l'ordre de 0,1°C/mn jusqu'à -20°C, puis on maintient cette température pendant 10 heures. Enfin, pour stabiliser la modification de texture de la pâte, on lyophilise puis on chauffe à 100°C pendant 2 minutes. La pâte de soja présente alors une texture fibreuse et lamellaire. Cette texture se rapproche fortement de la texture des "corn flakes".

Pour comparaison, la même composition de pâte est congelée sans jus brut de baies, lyophilisée puis chauffée dans les mêmes conditions que précédemment. On obtient ainsi une pâte présentant une texture spongieuse et désordonnée qui ne rappelle en rien la texture des "corns flakes".

### Exemple 4

On ajoute à un extrait de café comprenant 10% de matière sèche, 0,03% de l'extrait de baie d'argousier décrit à l'exemple 1. On congèle à -6,5°C pendant 30 min, puis on centrifuge à 2000g pendant 15 min à -5°C, et l'on récolte lesurnageant. On sépare de ce fait la phase liquide de la phase cristalline du mélange, et l'on obtient ainsi un extrait de café comprenant 15,3% de matière sèche.

Pour comparaison, le même extrait de café comprenant 10% de matière sèche ne congèle pas en l'absence de l'agent de nucléation selon la présente invention.

## Revendications

1. Agent de nucléation de la glace extrait de l'argousier (Hippophae).

2. Agent selon la revendication 1, caractérisé en ce que l'argousier est *Hippophae rhamnoides*, *Hippohae salicifolia*, *Hippophae tibetana*, ou *Hippophae neurocarpa*.

3. Agent selon la revendication 1, caractérisé en ce qu'il est un agrégat comprenant une partie protéique et une partie lipidique.

4. Procédé de production d'un agent de nucléation de la glace dans lequel on prépare un extrait des baies ou des feuilles de l'argousier contenant ledit agent.

5. Procédé de production selon la revendication 4, caractérisé en ce que l'on extrait les baies et/ou les feuilles par une solution de pectine, de mono-, oligo- et/ou poly-saccharide.

6. Procédé de production selon la revendication 5, caractérisé en ce qu'on choisit ladite solution dans le groupe formé par les solutions d'alginates, d'acide polygalacturonique, d'amylose, d'amylopectine, de polymannanes, d'arabinose, de galactose, de lactose, de glucose, de fructose et de sucrose.

7. Procédé selon la revendication 4, caractérisé en ce que pour extraire les feuilles et/ou les baies écrasées ou broyées, on les mélange à 1 à 200 volumes d'une solution comprenant 0,0001 à 2% en poids de pectine et/ou 0,0001 à 2% en poids d'au moins un saccharide, pendant 1 à 30 min, puis on sépare une partie solide et on récolte une partie liquide.

8. Procédé selon la revendication 7, caractérisé en ce que l'on soumet ladite partie solide du mélange à au moins une nouvelle extraction.

## Claims

1. Ice nucleation agent extracted from the sallow-thorn (Hippophaë).

2. Agent according to claim 1, characterized in that the sallow-thorn is *Hippophaë rhamnoides*, *Hippophaë salicifolia*, *Hippophaë tibetana* or *Hippophaë neurocarpa*.

3. Agent according to claim 1, characterized in that it is an aggregate comprising a proteinic part and a lipidic part.

4. Method for producing an ice nucleation agent wherein an extract is prepared from the berries or leaves of the sallow-thorn containing the said agent.

5. Production method according to claim 4, characterized in that the berries and/or leaves are extracted with a pectin, mono-, oligo- and/or polysaccharide solution.

6. Production method according to claim 5, characterized in that the said solution is chosen from the group consisting of solutions of alginates, polygalacturonic acid, amylose, amylopectin, polymannans, arabinose, galactose, lactose, glucose, fructose and sucrose.

7. Method according to claim 4, characterized in that in order to extract the crushed or ground leaves and/or berries, they are mixed with 1 to 200 volumes of a solution containing 0.0001 to 2 % by weight of pectin and/or 0.0001 to 2 % by weight of at least one saccharide, for 1 to 30 min., a solid part is then separated and a liquid part is collected.

8. Method according to claim 7, characterized in that the said solid part of the mixture is subjected to at least one new extraction.

## Patentansprüche

1. Nukleationsmittel für Eis, das aus Sanddorn (Hippophae) extrahiert wurde.

2. Mittel nach Anspruch 1, dadurch gekennzeichnet, daß der Sanddorn *Hippophae rhamnoides*, *Hippophae salicifolia*, *Hippophae tibetana* oder *Hippophae neurocarpa* ist.

3. Mittel nach Anspruch 1, dadurch gekennzeichnet, daß es eine Stoffmischung ist, die einen proteinischen Teil und einen Lipidteil aufweist.

4. Verfahren zur Herstellung eines Nukleationsmittels für Eis, bei dem man einen Extrakt aus den Beeren oder Blättern von Sanddorn herstellt, der dieses Mittel enthält.

5. Verfahren zur Herstellung nach Anspruch 4, dadurch gekennzeichnet, daß man die Beeren und/oder Blätter mit einer Lösung von Pektin, einem Mono-, Oligo- und/oder Poly-Saccharid extrahiert.

6. Verfahren zur Herstellung nach Anspruch 5, dadurch gekennzeichnet, daß diese Lösung ausgewählt ist aus der Gruppe, die gebildet wird von Lösungen von Alginaten, Polygalacturonsäure, Amylose, Amylopektin, Polymannanen, Arabinose, Galactose, Lactose, Glucose, Fructose und Saccharose.

7. Verfahren nach Anspruch 4, dadurch gekennzeichnet, daß man zur Extraktion die Blätter und/oder die Beeren zerquetscht oder zerkleinert, sie für 1 bis 30 min mit 1 bis 200 Volumina einer Lösung mischt, die 0,0001 bis 2 Gew.-% Pektin und/oder 0,0001 bis 2 Gew.-% wenigstens eines Saccharids enthält, danach einen Feststoffanteil abtrennt und einen Flüssiganteil gewinnt.

8. Verfahren nach Anspruch 7, dadurch gekennzeichnet, daß man den Feststoffanteil der Mischung wenigstens einer weiteren Extraktion unterwirft.
